(19) Europäisches Patentamt
European Patent Office
Office européen des brevets

(11) **EP 1 780 051 B1**

(12) **EUROPEAN PATENT SPECIFICATION**

(45) Date of publication and mention
of the grant of the patent:
**09.07.2008 Bulletin 2008/28**

(51) Int Cl.:
***B60C 1/00*** *(2006.01)*          ***C08K 3/04*** *(2006.01)*
***C08L 7/00*** *(2006.01)*          ***C08L 9/00*** *(2006.01)*

(21) Application number: **06020305.6**

(22) Date of filing: **27.09.2006**

(54) **Rubber composition for tire tread**

Kautschukzusammensetzung für Reifenauflächen

composition de caoutchouc pour bande de roulement de pneumatique

(84) Designated Contracting States:
**DE FR GB IT**

(30) Priority: **11.10.2005 JP 2005296647**

(43) Date of publication of application:
**02.05.2007 Bulletin 2007/18**

(73) Proprietor: **SUMITOMO RUBBER INDUSTRIES, LTD.**
**Kobe-shi, Hyogo-ken (JP)**

(72) Inventor: **Otsuki, Hirotoshi**
**Chuo-ku**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 1 162 231**          **JP-A- 60 104 112**
**JP-A- 2001 192 504**          **JP-A- 2002 338 740**
**JP-A- 2004 339 467**          **US-A1- 4 710 554**
**US-A1- 4 721 749**          **US-B2- 6 576 731**

**Description**

The present invention relates to a rubber composition for a tire tread.

Conventionally, abrasion resistance has emphasized to be the most important for a large-sized radial tire (track and bus radial tire: TBR) for a heavy load used for an autotruck and a bus, and a composition desired to improve a tire life has been proceeded. Generally, in a composition of a tread rubber grounding to a road surface, a rubber composition compounding a natural rubber as the main component, and 40 to 60 parts by weight of carbon black based on 100 parts by weight of a rubber component is used.

Regarding abrasion resistance, there are two kinds, which are abrasion resistance under a high severity abrasion condition and abrasion resistance under a low severity abrasion condition. Herein, the high severity abrasion condition refers to a condition in which slip between a tire and a road surface frequently occurs due to start and stop, and the low severity abrasion condition refers to a condition having less slip between a tire and a road surface such as running at a constant speed on a highway

As for a rubber composition used for a tire for a dump truck used under severe conditions or a tread part of a tire for a bus that frequently starts and stops, compounding 5 to 40 % by weight of butadiene rubber in a rubber component is commonly used as means to improve abrasion resistance under the high severity abrasion resistance. Generally, when a butadiene rubber having a molecular distribution of at most 3.0 is used, it is known that a tire more excellent in abrasion resistance under the high severity abrasion condition can be obtained. However, as for a rubber composition for a tire tread used for a transportation track and a high-speed bus which run mainly on a highway or a paved road, even though a butadiene rubber is blended thereto, large improvement effect of abrasion resistance is not recognized, and on the contrary, a demerit such as lowering of low exothermic property compared with a natural rubber is caused, and abrasion resistance may be lowered from an influence of the demerit.

Further, recently, extension of highways, a loading regulation of a large-sized vehicle, and a speed regulation on highways, further in transportation companies, speed administration by introduction of a digital tachometer recorder in order to reduce fuel costs and the like are introduced, and intended uses under low abrasion severity have become the main purpose, needs for a tire excellent in abrasion resistance under the low severity abrasion condition has been enhanced.

Since abrasion is mainly caused by adhesion under the low severity abrasion condition, it is considered that abrasion resistance can be improved by lowering adhesivity of a compounded rubber. Thus, methods of improving rubber hardness by compounding a large amount of carbon black or a vulcanizing agent, increasing an amount of a natural rubber, and blending a small amount of a styrene butadiene rubber are generally adopted.

However, if an amount of carbon black is excessively increased, low exothermic property of a rubber is lowered, and in adverse, performance of abrasion resistance is lowered. If an amount of a vulcanizing agent is excessively increased, performance of rubber crack resistance is deteriorated. Further, an amount of a natural rubber is excessively increased and an amount of a butadiene rubber is excessively decreased, abrasion resistance under the high severity abrasion condition is deteriorated.

Adhesivity of a rubber can be lowered also by increasing viscosity of a compounded rubber, however, in this case, low exothermic property of a rubber is lowered in an extrusion step of a tire preparing process, and it is necessary to reduce an extraction speed, thus, a demerit such as lowering of productivity is caused.

Regarding characteristics of a butadiene rubber, a toluene solution viscosity, which represents a degree of branching in a molecular structure, and a molecular weight distribution are mentioned. As for butadiene rubbers which are generally commercially available, these are divided into two types, in which one type has a small toluene solution viscosity and a large molecular weight distribution and the other type has a large toluene solution viscosity and a small molecular weight distribution. Under the high severity abrasion condition, it is considered that a butadiene rubber having a large toluene solution viscosity and a small molecular weight distribution is excellent. Adversely, a rubber composition excellent in abrasion resistance under the low severity abrasion condition has not been specifically studied.

JP-A-2005-139396 describes a rubber composition excellent in abrasion resistance without lowering processability and productivity by using a butadiene rubber having small molecular weight distribution and toluene solution viscosity.

An object of the present invention is to provide a rubber composition used for a tire tread excellent in abrasion resistance under a high severity abrasion condition and a low severity abrasion condition, while keeping low exothermic property and rubber crack resistance.

The present invention related to a rubber composition for a tire tread, comprising a rubber component containing 5 to 40 % by weight of a butadiene rubber having 110 to 150 cps of a toluene solution viscosity and 3.0 to 3.4 of a molecular weight distribution, wherein a Mooney viscosity of the rubber composition ($MS_{1+4}$/130°C) is 45 to 70.

It is preferable that the rubber composition further contains at least 40 % by weight of a natural rubber or an isoprene rubber in the rubber component.

It is preferable that the rubber composition further comprises 40 to 60 parts by weight of carbon black having 120 to 160 mg/g of an iodine adsorbing amount and 90 to 115cm$^3$/100g of a crashed dibutyl phthalate oil absorption amount (C-DBP).

The rubber composition for a tire tread of the present invention comprises a rubber component containing a butadiene rubber (BR).

It is preferable that BR in the rubber component has larger molecular weight distribution, and further, the molecular structure thereof is in the state of a more straight chain from the viewpoint that balance between abrasion resistance and low exothermic property is excellent. In the present invention, as an index of the above described molecular structure in the state of a straight chain, a toluene solution viscosity is used.

A 5 % toluene solution viscosity (T-CP) of BR at 25°C is at least 110 cps, and preferably at least 120 cps. When T-CP of BR is less than 110 cps, significant improvement in abrasion resistance and low fuel consumption can not be admitted. Further, T-CP of BR is at most 150 cps, and preferably at most 140 cps. When T-CP of BR is more than 150 cps, processability is significantly inferior.

A molecular weight distribution of BR (Mw/Mn) is at least 3.0, and preferably at least 3.1. When Mw/Mn is less than 3.0, it is difficult to improve processability. Mw/Mn is at most 3.4, and preferably at most 3.3. When Mw/Mn is more than 3.4, abrasion resistance is lowered.

A Mooney viscosity of BR (material rubber) at 100°C ($ML_{1+4}$/100°C) is preferably at least 35, and more preferably at least 40. When $ML_{1+4}$/100°C of BR is less than 35, it tends that significant improvements in abrasion resistance and low fuel consumption can not be admitted. Further, $ML_{1+4}$/100°C of BR is preferably at most 55, and more preferably at most 50. When $ML_{1+4}$/100°C of BR is more than 55, processability is lowered and further improvements in abrasion resistance and low fuel consumption can not be admitted.

An amount of BR is at least 5 % by weight, and preferably at least 10 % by weight. An amount of BR is less than 5 % by weight, an effect of improvement in abrasion resistance is insufficient, and crack growth resistance is inferior. An amount of BR is at most 40 % by weight, and preferably 35 % by weight. When an amount of BR is more than 40 % by weight, low exothermic property and low fuel consumption are lowered.

Further, it is preferable that a natural rubber (NR) and an isoprene rubber (IR) are contained in the rubber composition of the present invention other than the above described BR from the reason that low severity abrasion resistance and rubber crack resistance are improved.

An amount of NR or IR in the rubber component is preferably at least 40 % by weight, and more preferably at least 50 % by weight. When an amount of NR or IR in the rubber component is less than 40 % by weight, abrasion resistance under the low severity abrasion condition is lowered, it tends to be difficult to keep rubber crack resistance. An amount of NR or IR is preferably at most 90 % by weight, and more preferably at most 80 % by weight. When an amount of NR or IR is more than 90 % by weight, it tends that abrasion resistance under the low severity abrasion condition is lowered.

In the rubber composition of the present invention, as rubbers used in the present invention other than BR, NR and IR, an example is a styrene-butadiene rubber (SBR), and these are used alone, or at least two kinds thereof are kneaded to be used.

SBR is particularly preferable as a rubber from the reason that low severity abrasion resistance and rubber crack resistance are improved, and in this case, an amount of SBR in the rubber component is at least 5 % by weight. When an amount of SBR is less than 5 % by weight, it tends that improvement in low severity abrasion resistance is not admitted. An amount of SBR is preferably at most 10 % by weight. When an amount of SBR is more than 10 % by weight, it tends that low exothermic property is lowered.

Further, it is preferable that carbon black is compounded in the rubber composition of the present invention together with the above described rubber components.

Carbon black can be obtained by usual processes for preparing carbon black. Specifically, for example, in a method such as the Furnace method, carbon black satisfying the above described requirements can be obtained by suitably adjusting factors such as an introducing amount of a raw material, an introducing amount of air for combustion, an oxygen amount in the air for combustion, a reaction temperature and a reaction time.

An iodine adsorbing amount (IA) of the above described carbon black is preferably at least 120 mg/g, and more preferably at least 130 mg/g. When IA of the carbon black is less than 120 mg/g, it tends that an improvement effect of abrasion resistance is insufficient. IA of the carbon black is preferably at most 160 mg/g, and more preferably at most 150 mg/g. When IA of the carbon black is more than 160 mg/g, it tends that low exothermic property and low fuel consumption are lowered.

A crashed dibutyl phthalate oil absorption amount (C-DBP) of the above described carbon black is preferably at least 90 cm$^3$/ 100g, and more preferably at least 95 cm$^3$/ 100g. When C-DBP of the carbon black is less than 90 cm$^3$/ 100g, it tends that improvement effects of abrasion resistance and low exothermic property are insufficient. C-DBP of the carbon black is preferably at most 115 cm$^3$/ 100g, and more preferably at most 110 cm$^3$/ 100g. When C-DBP of the carbon black is more than 115 cm$^3$/ 100g, it tends that fatigue resistance property such as elongation is lowered. Further, C-DBP refers to a dibutyl phthalate (DBP) oil absorption amount when compressed at four times under the condition of a pressure at 24 MPa.

An amount of carbon black is preferably at least 40 parts by weight, and more preferably at least 45 parts by weight based on 100 parts by weight of the above described rubber component. When the amount of carbon black is less than 40 parts by weight, it tends that abrasion resistance is lowered. The amount of carbon black is preferably at most 60 parts by weight, and more preferably at most 55 parts by weight. When the amount of carbon black is more than 60 parts by weight, a viscosity of a rubber composition is increased, and it tends that processability is deteriorated.

In the rubber composition of the present invention, compounding agents such as an oil, fatty acid, a wax, an antioxidant, a crosslinking agent such as sulfur, a crosslinking aid, and a vulcanization accelerator are compounded other than the above described rubber components and carbon black.

As an oil, examples are an aromatic oil, a naphthene oil, and a paraffin oil.

As fatty acid, examples are stearic acid, palmitinic acid, and naphthenic acid.

A Mooney viscosity of the rubber composition of the present invention at 130°C ($MS_{1+4}$/130°C) is at least 45, and preferably at least 50. When $MS_{1+4}$/130°C of the rubber composition is less than 45, low severity abrasion resistance is lowered. Further, $MS_{1+4}$/130°C of the rubber composition is at most 70, and preferably at most 65. When $MS_{1+4}$/130°C of the rubber composition is more than 70, processability and productivity are deteriorated.

A tire in which abrasion resistance under the low severity abrasion condition and the high severity abrasion condition can be improved is obtained by applying the rubber composition for a tire tread of the present invention to a tire tread, in particular, a tire tread for a heavy load such as an autotruck and a bus, while keeping low exothermic property and a rubber strength index favorable.

EXAMPLES

The present invention is explained in detail based on Examples, but is not limited only thereto.

Various chemicals used in Examples and Comparative Examples are specifically described.

Natural rubber: TSR20
Butadiene rubber 1: BR 150B (product name) available from Ube Industries, Ltd.
Butadiene rubber 2: BR150L (product name) available from Ube Industries, Ltd.
Butadiene rubber 3: BR360L (product name) available from Ube Industries, Ltd.
Butadiene rubber 4: BRO1 (product name) available from JSR Corporation
Butadiene rubber 5: BR A (prototype) available from Ube Industries, Ltd.
Butadiene rubber 6: BR B (prototype) available from Ube Industries, Ltd.
Styrene butadiene rubber: SBR1502 (product name) available from JSR Corporation.
Carbon black 1: CARBON ISAF (product name) (IA: 119 mg/g, C-DBP: 95cm$^3$/ 100g) available from SHOWA CABOT K.K.
Carbon black 2: CARBON N339 (product name) (IA: 92 mg/g, C-DBP: 98cm$^3$/ 100g) available from SHOWA CABOT K.K.
Sulfur: SULFUR available from Tsurumi Chemical Industry Co., Ltd.
Zinc oxide: ZINC OXIDE available from Mitsui Mining & Smelting Co., Ltd.
Stearic acid: "TSUBAKI" (product name) available from NOF Corporation.
Antioxidant: Antioxidant 6C (product name) (N-phenyl-N'-(1,3-dimethylbutyl)-p-phenylenediamine) available from Flexsis K. K.
Wax: Ozoace wax (product name) available from NIPPON SEIRO CO., LTD.
Vulcanization accelerator: Accelerator TBBS (product name) available from Seiko Chemical Co., Ltd.

(Measurement of toluene solution viscosity)

A butadiene rubber is dissolved in toluene to prepare a 5 % toluene solution, a viscosity of a toluene solution (T-CP) is calculated from a falling time of a dynamic viscometer by using a Canon Fensk type dynamic viscometer (#400) to measure T-CP under the condition of a measuring temperature at 25°C.

(Measurement of molecular weight)

An weight average molecular weight (Mw) and a number average molecular weight (Mn) calculated in terns of polystyrene are measured by gel permeation chromatograph (GPC), and molecular weight distributions (Mw/Mn) of butadiene rubbers 1 to 6 are calculated.

(Measurement of Mooney viscosity of a butadiene rubber (material rubber))

A Mooney viscosity ($ML_{1+4}$/100°C) of a material rubber heated by preheating for 1 minute is measured under a condition of a temperature at 100°C at a time when it takes four minutes after rotating a large rotor by using a Mooney viscosity tester "Mooney Viscometer SMV-202" manufactured by Shimadzu corporation.
Results of the above described measurements are shown in Table 1.

TABLE 1

| | Manufacturers | Properties of materials | | |
|---|---|---|---|---|
| | | T-CP | Mw/Mn | Mooney viscosity of material rubbers ($ML_{1-4}$/100°C) |
| BR 150B | Ube Industries, Ltd. | 48 | 3.3 | 40 to 45 |
| BR150L | Ube Industries, Ltd. | 75 | 2.8 | 43 to 48 |
| BRA (prototype) | Ube Industries, Ltd. | 122 | 3.3 | 42 to 47 |
| BR B (prototype) | Ube Industries, Ltd. | 149 | 3.2 | 43 to 48 |
| BR360L | Ube Industries, Ltd. | 124 | 2.4 | 48 to 53 |
| BRO1 | JSR Corporation | 152 | 4.2 | 42 to 47 |

EXAMPLES 1 to 4 and COMPARATIVE EXAMPLES 1 to 9

(Preparation of unvulcanized rubber compositions)

Chemicals other than sulfur described in Table 2 respectively in compounding amounts shown in Table 2, and 3 parts by weight of zinc oxide, 4 parts by weight of stearic acid, 2 parts by weight of an antioxidant, and 1.5 parts by weight of a wax were kneaded for 4 minutes until a temperature reached 150°C by using a closed banbury mixer. Sulfur in a compounding amount shown in Table 2 and 1.5 parts by weight of a vulcanization accelerator were added to the obtained kneaded article, and the mixture was kneaded at 40°C for 4 minutes by using a twin screw open roll to respectively prepare unvulcanized rubber compositions.

(Measurement of Mooney viscosity)

A test piece having a width of 4 cm, a length of 4 cm and a thickness of 7 to 9 mm is prepared from the above described unvulcanized rubber composition, and a viscosity of the unvulcanized rubber composition heated by preheating for one minute ($MS_{1+4}$/130°C) is measured under a condition of a temperature at 130°C at the time when it takes 4 minutes after rotating a small rotor by using a Mooney viscosity tester "Mooney Viscometer SMV-202" made by Shimadzu corporation according to JIS K 6300 of "test method of unvulcanized rubbers".
Results of the above described measurements are shown in Table 2.

(Preparation of vulcanized rubber composition)

Vulcanized rubber compositions were prepared by press-vulcanizing for 30 minutes at 150°C, and tests for respective properties shown in the following were carried out by using these vulcanized rubber compositions.

(Abrasion resistance)

A test piece having a diameter of 50 mm and a thickness of 6 mm from the above described vulcanized rubber composition, a test for abrasion resistance was carried out under conditions of surface rotational speed at 80 m/min, an amount of falling sand of 15 g/min, a temperature at 23°C, and a load weight of 3.0 kg, with the low severity abrasion condition and with the high severity abrasion condition by using a Lambourn abrasion tester made by Iwamoto Seisakusho K.K., and a volume loss was measured to obtain an amount of the volume loss. A test under the low severity abrasion condition was carried out at 20 % of a slip rate for 5 minutes of a testing time, and a test under the high severity abrasion condition was carried out at 40 % of a slip rate for 3 minutes of a testing time.
Then, a low severity abrasion index and a high severity abrasion index of Examples 1 to 4 and Comparative examples 1 to 9 were calculated by the following calculation formulas from the obtained volume loss amount. Further, it indicates that the larger the index is, the more excellent abrasion resistance is.

$$\text{(low severity abrasion index)} = \text{(volume loss amount of Comparative Example 1 under the low severity condition)} \div \text{(volume loss amounts of respective compositions under the low severity condition)} \times 100$$

$$\text{(high severity abrasion index)} = \text{(volume loss amount of Comparative Example 1 under the high severity condition)} \div \text{(volume loss amounts of respective compositions under the high severity condition)} \times 100$$

(Viscoelasticity test)

A test piece having a width of 4 mm, a length of 30 mm and a thickness of 1.8 to 2.2 mm was cut out from the above described vulcanized rubber composition, and a measurement of loss tangent (tan δ) at 70°C under conditions of an initial strain at 10 %, a dynamic strain at 2 %, and a frequency at 10 Hz was carried out.
It indicates that the smaller the value is, the more exothermic heat of the rubber composition is suppressed.

(Tensile test)

A tensile test was carried out under the condition of a temperature at 100°C for 72 hours, using No.3 dumbbell comprising a thermally oxidation-degraded rubber sheet for a test, according to JIS K6251, and strength at break (TB) and elongation at break (EB) of the test piece were respectively measured.
The strength at break (TB) and elongation at break (EB) of Comparative Example 1 is assumed to be 100 and is represented as an index by the following calculation formula. Since the larger the index is, the more excellent rubber strength is, a rubber is hardly cracked.

$$\text{(Index of rubber strength)} = \text{((TB)} \times \text{(EB) of respective compositions)} \div \text{((TB)} \times \text{(EB) of Comparative Example 1)} \times 100$$

Results of the above described measurements are shown in Table 2.

TABLE 2

| | Ex. | | | | Com. Ex. | | | | | | | | |
|---|---|---|---|---|---|---|---|---|---|---|---|---|---|
| | 1 | 2 | 3 | 4 | 1 | 2 | 3 | 4 | 5 | 6 | 7 | 8 | 9 |
| Amounts (part by weight) | | | | | | | | | | | | | |
| Natural rubber (TSR20) | 80 | 80 | 49 | 60 | 80 | 80 | 80 | 80 | 96 | 59 | 60 | 60 | 60 |
| BR150B | - | - | - | - | 20 | - | - | - | - | - | - | - | 40 |
| BR150L | - | - | - | - | - | 20 | - | - | - | - | - | - | - |
| BR360L | - | - | - | - | - | - | 20 | - | - | - | - | - | - |
| BR01 | - | - | - | - | - | - | - | 20 | - | - | - | - | - |
| BR A | 20 | - | 40 | 40 | - | - | - | - | 4 | 41 | 40 | 40 | - |
| BR B | - | 20 | - | - | - | - | - | - | - | - | - | - | - |
| SBR1502 | - | - | 11 | - | - | - | - | - | - | - | - | - | - |
| Carbon ISAF | 50 | 50 | 50 | - | 50 | 50 | 50 | 50 | 50 | 50 | 61 | 39 | 50 |
| Carbon N339 | - | - | - | 55 | - | - | - | - | - | - | - | - | - |
| Sulfur | 1 | 1 | 1 | 1 | 1 | 1 | 1 | 1 | 1 | 1 | 1 | 1 | 1.5 |
| Evaluation results | | | | | | | | | | | | | |
| Mooney viscosity of rubber composition ($MS_{1+4}$/130°C) | 65 | 68 | 68 | 65 | 60 | 65 | 72 | 71 | 58 | 68 | 72 | 44 | 66 |
| Low severity abrasion index | 110 | 113 | 110 | 109 | 100 | 103 | 105 | 110 | 112 | 120 | 113 | 107 | 113 |
| High severity abrasion index | 107 | 110 | 112 | 110 | 100 | 107 | 110 | 100 | 89 | 113 | 115 | 110 | 110 |
| Tanδ | 0.128 | 0.123 | 0.139 | 0.134 | 0.13 | 0.12 | 0.115 | 0.12 | 0.105 | 0.135 | 0.14 | 0.093 | 0.127 |
| Rubber strength index | 105 | 104 | 90 | 95 | 100 | 105 | 100 | 103 | 115 | 87 | 92 | 125 | 85 |

According to the present invention, a rubber composition used for a tire tread excellent in abrasion resistance under a high severity abrasion condition and a low severity abrasion condition, while keeping low exothermic property and rubber crack resistance, can be provided by containing a butadiene rubber having large toluene solution viscosity and molecular weight distribution in a rubber component.

## Claims

1.  A rubber composition for a tire tread, comprising a rubber component containing 5 to 40 % by weight of a butadiene rubber having 110 to 150 cps of a toluene solution viscosity and 3.0 to 3.4 of a molecular weight distribution, wherein a Mooney viscosity of the rubber composition ($ML_{1+4}$/130°C) is 45 to 70.

2.  The rubber composition for a tire tread of Claim 1, wherein at least 40 % by weight of a natural rubber or an isoprene rubber is further contained in the rubber component.

3.  The rubber composition for a tire tread of Claim 1, comprising 40 to 60 parts by weight of carbon black having 120 to 160 mg/g of an iodine adsorbing amount and 90 to 115 $cm^3$/ 100g of a crashed dibutyl phthalate oil absorption amount (C-DBP).

## Patentansprüche

1.  Kautschukzusammensetzung für eine Reifenlauffläche enthaltend eine Kautschukkomponente, welche 5 bis 40 Gew.-% eines Butadienkautschuks mit einer Toluollösungsviskosität von 110 bis 150 cps und mit einer Molekulargewichtsverteilung von 3,0 bis 3,4 enthält, wobei die Mooney-Viskosität der Kautschukzusammensetzung ($ML_{1+4}$/130°C) 45 bis 70 beträgt.

2.  Kautschukzusammensetzung für eine Reifenlauffläche nach Anspruch 1, wobei in der Kautschukkomponente ferner wenigstens 40 Gew.-% eines Naturkautschuks oder eines Isoprenkautschuks enthalten sind.

3.  Kautschukzusammensetzung für eine Reifenlauffläche nach Anspruch 1, welche 40 bis 60 Gewichtsteile Ruß mit einer Iodadsorptionsmenge von 120 bis 160 mg/g und mit einer zertrümmerten Dibutylphthalatölabsorptionsmenge (C-DBP) von 90 bis 115 $cm^3$/ 100g enthält.

## Revendications

1.  Composition de caoutchouc pour une bande de roulement de pneumatique, comprenant un composant caoutchouc contenant 5 à 40 % en poids d'un caoutchouc de butadiène ayant une viscosité en solution dans le toluène de 110 à 150 cps et une distribution des masses moléculaires de 3,0 à 3,4, dans laquelle la viscosité Mooney de la composition de caoutchouc ($ML_{1+4}$/130°C) est de 45 à 70.

2.  Composition de caoutchouc pour une bande de roulement de pneumatique selon la revendication 1, dans laquelle au moins 40 % en poids d'un caoutchouc naturel ou d'un caoutchouc d'isoprène sont en outre présents dans le composant caoutchouc.

3.  Composition de caoutchouc pour une bande de roulement de pneumatique selon la revendication 1, comprenant 40 à 60 parties en poids d'un noir de carbone ayant une quantité d'absorption d'iode de 120 à 160 mg/g et une quantité d'absorption d'huile de phtalate de dibutyle après écrasement (C-DBP) de 90 à 115 $cm^3$/100 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139396 A